# EUROPEAN PATENT APPLICATION

(11) **EP 2 421 277 A1**
(43) Date of publication of application: **22.02.2012**
(21) Application number: 11762531.9
(22) Date of filing: 10.03.2011
(51) Int. Cl.: H04N 13/04, G02B 27/22, G02F 1/13, G02F 1/133, G09G 3/20, G09G 3/34, G09G 3/36

(54) **IMAGE DISPLAY DEVICE, IMAGE DISPLAY SYSTEM, IMAGE PRESENTING METHOD, AND COMPUTER PROGRAM**

(30) Priority: 31.03.2010 JP 2010081029
(71) Applicant: Sony Corporation, Tokyo 108-0075 (JP)
(72) Inventor: NAKAGAWA, Makoto, Tokyo 108-0075 (JP); NAKAHATA, Yuji, Tokyo 108-0075 (JP); OGAWA, Ryo, Tokyo 108-0075 (JP)
(74) Representative: Ealey, Douglas Ralph
(86) International application number: PCT/JP2011/055647
(87) International publication number: WO 2011/122291

(57) **Abstract**

A plurality of images are alternately switched and displayed on the screen in a very short cycle while preventing crosstalk between the images.

Because a backlight 12 is lit on the liquid crystal display 10 side after a shutter mechanism on the shutter glasses 20 side has responded sufficiently, there is no adverse effect caused by lack of response at the time of rising of the shutter mechanism. Also, it is possible to raise peak brightness in comparison to the method of keeping the backlight 12 lit at all times, thereby enabling an improvement in brightness when displaying a stereoscopic image. On the other hand, a drop in the temperature of a liquid crystal display panel 11 following extinguishing of the backlight 12 becomes less, and so does deterioration of crosstalk.

## Description

### Technical Field

The present invention relates to an image display apparatus, an image display system, an image presentation method, and a computer program, which are used for display of a stereoscopic image using a shutter mechanism, and alternately switch and display a plurality of images on the screen in a very short cycle, in particular, an image display apparatus, an image display system, an image presentation method, and a computer program, which alternately switch and display a plurality of images on the screen in a very short cycle while preventing crosstalk between the images.

### Background Art

A stereoscopic image which appears stereoscopically to an observer can be presented by displaying images with disparity to the left and right eyes. An example of schemes for presenting a stereoscopic image is to have the observer wear glasses having special optical characteristics, and present views with disparity to both eyes. For example, a time-division stereoscopic image display system is made up of a combination of a display apparatus that displays a plurality of mutually different images by time division, and shutter glasses that are worn by the observer of the images. The display apparatus displays a left-eye image L and a right-eye image R alternately on the screen in a very short cycle and, at the same time, separately provides the images to the left eye and the right eye in synchronism with the cycles of the left-eye image L and right-eye image R. On the other hand, in the shutter glasses being worn by the observer, while the left-eye image L is displayed, the left-eye part of the shutter glasses passes light and the right-eye part blocks light, and while the right-eye image R is displayed, the right-eye part of the shutter glasses passes light and the left-eye part blocks light (see, for example, PTLs 1 to 3). When displaying the left-eye image L and the right-eye image R by time division, one technical problem is to separate the left-eye image L and the right-eye image R so as to avoid crosstalk.

For example, there has been proposed a stereoscopic view display method with which, by setting the time to switch both the left-eye shutter and the right-eye shutter to a light-blocking state to be earlier than the time when the frame period switches, a simultaneous light-blocking period during which the left-eye shutter and the right-eye shutter are simultaneously set to the light-blocking state is provided in a part of each frame period, thereby suppressing flicker due to after-images (see, for example, PTL 4) .

The display apparatus used for display of a stereoscopic image is not limited to a particular form. For example, other than conventional CRT (Cathod Ray Tube) displays, plasma display panels (PDPs), liquid crystal displays (LCDs), or electro-luminescence (EL) panels can be used as well. Of these, a common type of liquid crystal displays is active matrix in which TFTs (Thin File Transistors) are arranged in individual pixels. A TFT liquid crystal display performs display by driving each pixel by writing an image signal on a scan line by scan line basis from the top of the screen to the bottom, and blocking or passing light radiated from the backlight in each pixel.

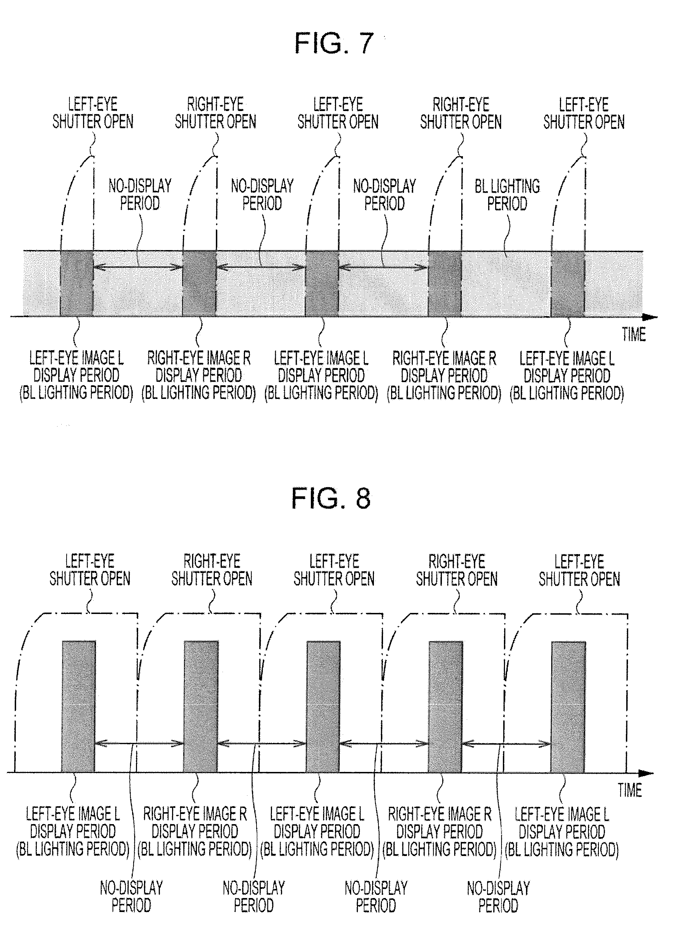

In the case of using a liquid crystal display to display a time-division stereoscopic image, the left-eye image L and the right-eye image R can be separated by providing a period during which both the shutter mechanisms become simultaneously closed (see, for example, Fig. 7). However, while the liquid crystal display performs display at all times, when each of the left and right shutter mechanisms switches to the open state, it takes time for the liquid crystals used for shuttering to rise. Thus, there is a problem in that an image that has become dark in this rising portion enters each of the left and right eyes, causing a decrease in brightness at the time of time-division display.

### Citation List

### Patent Literature

PTL 1: Japanese Unexamined Patent Application Publication No. 9-138384
PTL 2: Japanese Unexamined Patent Application Publication No. 2000-36969
PTL 3: Japanese Unexamined Patent Application Publication No. 2003-45343
PTL 4: Japanese Unexamined Patent Application Publication No. 2003-304115

### Summary of Invention

### Technical Problem

An object of the present invention is to provide superior image display apparatus, image display system, image presentation method, and computer program, which are used for display of a stereoscopic image using a shutter mechanism, and can suitably switch and display a plurality of images on the screen alternately in a very short cycle.

A further object of the present invention is to provide superior image display apparatus, image display system, image presentation method, and computer program, which can switch and display a plurality of images on the screen alternately in a very short cycle while preventing crosstalk between the images.

### Solution to Problem

The present application has been made in view of the above-mentioned problems, and the invention as defined in Claim 1 is an image display apparatus including:
a display section that switches and displays a plurality of images that are different from each other every sub-frame period;
a light source section that illuminates the display section while alternating between a lighting operation and an extinguishing operation so as to include a lighting period within each sub-frame period; and
a shutter control section that controls open/close timing with respect to a shutter mechanism for observing the plurality of images while separating the images, so that the shutter mechanism is switched to an open state in a period during which the light source section is extinguished, and is switched to a closed state in a period during which the light source section is lit.

According to the invention as defined in Claim 2 of the present application, in the image display apparatus as defined in Claim 1, the light source section is formed by a light-emitting diode.

Also, the invention as defined in Claim 3 of the present application is an image display system including:
a shutter mechanism; and
an image display apparatus including a display section that switches and displays a plurality of images that are different from each other every sub-frame period, a light source section that illuminates the display section while alternating between a lighting operation and an extinguishing operation so as to include a lighting period within each sub-frame period, and a shutter control section that controls open/close timing with respect to the shutter mechanism so that the shutter mechanism is switched to an open state in a period during which the light source section is extinguished, and is switched to a closed state in a period during which the light source section is lit.

It should be noted that the term "system" as used herein refers to a logical aggregation of a plurality of apparatuses (or functional modules for implementing specific functions), and it does not particularly matter whether the apparatuses or functional modules are located within a single casing.

Also, the invention as defined in Claim 4 of the present application is an image presentation method which separates and presents a plurality of images that are different from each other by an opening/closing operation of a shutter mechanism, the plurality of images being displayed by an image display apparatus having a display section that displays the images and a light source section that illuminates the display section, including:
an image controlling step of switching and displaying the plurality of images that are different from each other every sub-frame period by the display section;
a backlight controlling step of causing the light source section to alternate between a lighting operation and an extinguishing operation so as to include a lighting period within each sub-frame period; and
a shutter controlling step of switching the shutter mechanism to an open state in a period during which the light source section is extinguished, and switching the shutter mechanism to a closed state in a period during which the light source section is lit.

Also, the invention as defined in Claim 5 of the present application is a computer program which is described in a computer-readable format so as to execute, on a computer, processing for separating and presenting a plurality of images that are different from each other by an opening/closing operation of a shutter mechanism, the plurality of images being displayed by an image display apparatus having a display section that displays the images and a light source section that illuminates the display section, the computer program causing the computer to function as:
image controlling means for switching and displaying the plurality of images that are different from each other every sub-frame period;
backlight controlling means for causing the light source section to alternate between a lighting operation and an extinguishing operation so as to include a lighting period within each sub-frame period during which the display section displays each of the plurality of images by time division; and
shutter controlling means for switching the shutter mechanism to an open state in a period during which the light source section is extinguished, and switching the shutter mechanism to a closed state in a period during which the light source section is lit.

The computer program according to Claim 5 of the present application defines a computer program that is described in a computer-readable format so as to implement predetermined processing on a computer. In other words, by installing the computer program according to Claim 5 of the present application to the computer, synergistic operation is exerted on the computer, making it possible to obtain the same operational effect as that of the image display apparatus according to Claim 1 of the present application.

Also, the invention as defined in Claim 6 of the present application is an image display apparatus including:
a display section that switches and displays a plurality of images that are different from each other every sub-frame period;
a light source section that illuminates the display section while alternating between a lighting operation and an extinguishing operation so as to include a lighting period within each sub-frame period; and
a shutter control section that controls open/close timing with respect to a shutter mechanism for observing the plurality of images while separating the images, so that the shutter mechanism is switched to an open state in a period during which the light source section is lit, and is switched to a closed state in a period during which the light source section is extinguished.

Also, the invention as defined in Claim 7 of the present application is an image display apparatus including:
a display section that switches and displays a plurality of images that are different from each other every sub-frame period, for each of blocks obtained by splitting a screen into a plurality of parts;
a plurality of light source sections that are provided for each of the blocks in the display section, and provide illumination while alternating between a lighting operation and an extinguishing operation; and
a shutter control section that controls open/close timing with respect to a shutter mechanism for observing the plurality of images while separating the images, so that the shutter mechanism is switched to an open state in a period during which at least one of the plurality of light source sections is lit, and is switched to a closed state in a period during which the at least one light source is extinguished.

According to the invention as defined in Claim 8 of the present application, the image display apparatus as defined in Claim 7 is configured so that the image display apparatus includes a plurality of shutter mechanisms, and at least one of the plurality of light source sections is lit in a period during which all of the shutter mechanisms are in a closed state.

### Advantageous Effects of Invention

According to the present invention, it is possible to provide superior image display apparatus, image display system, image presentation method, and computer program, which are used for display of a stereoscopic image using a shutter mechanism, and can suitably switch and display a plurality of images on the screen alternately in a very short cycle.

Also, according to the present invention, it is possible to provide superior image display apparatus, image display system, image presentation method, and computer program, which can switch and display a plurality of images on the screen alternately in a very short cycle while preventing crosstalk between the images.

According to the present invention, the shutter mechanism of the corresponding lens on the shutter glasses side is opened during the time when the backlight is extinguished, and the shutter mechanism is closed while the backlight is lit. In other words, since the backlight is lit on the liquid crystal display side after the shutter mechanism on the shutter glasses side has responded sufficiently, there is no adverse effect caused by lack of response at the time of rising of the shutter mechanism.

Also, according to the present invention, since the method of intermittently lighting the backlight is employed, it is possible to raise peak brightness, thereby enabling an improvement in brightness when displaying a stereoscopic image. On the other hand, since a relatively long lighting time can be secured for the backlight, a drop in the temperature of the liquid crystal display panel following extinguishing of the backlight becomes less, and so does deterioration of crosstalk.

Other objects, features, and advantages of the present invention will become apparent from the following detailed description of embodiments of the present invention and the accompanying drawings.

### Brief Description of Drawings

[Fig. 1] Fig. 1 is a diagram schematically showing the configuration of a stereoscopic image display system to which the present invention can be applied.
[Fig. 2] Fig. 2 is a diagram showing the control operation of shutter glasses 20 in an L sub-frame period.
[Fig. 3] Fig. 3 is a diagram showing the control operation of the shutter glasses 20 in an R sub-frame period.
[Fig. 4] Fig. 4 is a diagram showing an operation of opening a shutter mechanism on the shutter glasses side during the time when the backlight is extinguished, and closing the shutter mechanism while the backlight is lit.
[Fig. 5] Fig. 5 is a diagram showing an operation of opening the shutter mechanism on the shutter glasses side during the time when the backlight is lit, and closing the shutter mechanism while the backlight is extinguished.
[Fig. 6] Fig. 6 is a diagram showing an operation for separating a left-eye image L and a right-eye image R in a liquid crystal display in which the screen of a liquid crystal display panel is split into three blocks of upper, middle, and lower parts and driven partially.
[Fig. 7] Fig. 7 is a diagram showing an operation for separating the left-eye image L and the right-eye image R by the opening/closing operation of the shutter mechanism of the shutter glasses, while keeping the backlight of the liquid crystal display lit at all times.
[Fig. 8] Fig. 8 is a diagram showing an operation for separating the left-eye image L and the right-eye image R by lighting the backlight in synchronism with the shutter mechanism of the shutter glasses.

### Description of Embodiments

Hereinbelow, embodiments of the present invention will be described in detail with reference to the drawings.

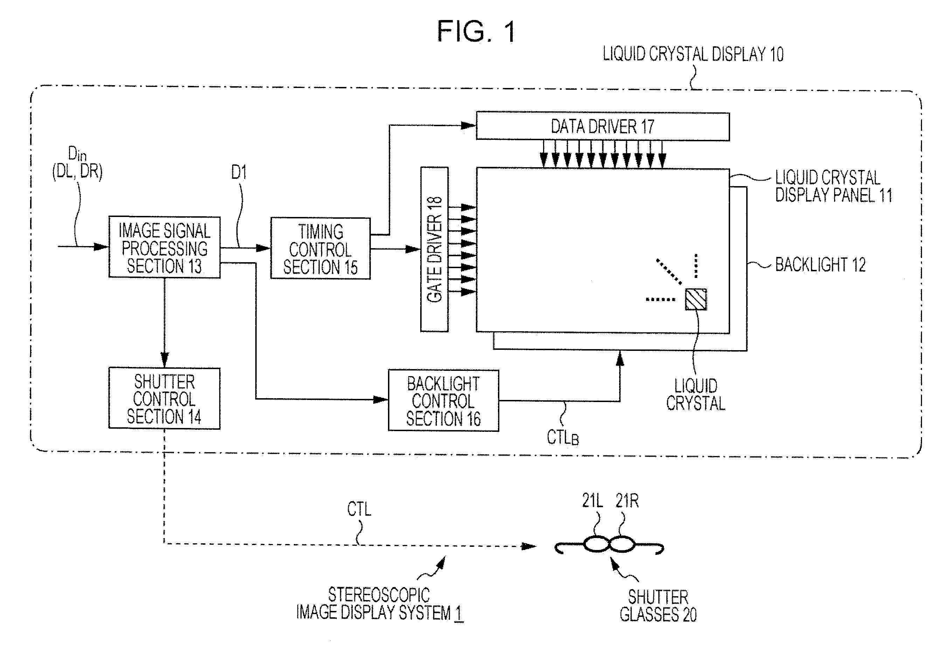

Fig. 1 schematically shows the configuration of a stereoscopic image display system 1 to which the present invention can be applied. The stereoscopic image display system 1 shown in the drawing includes a display apparatus 10 that alternately displays a left-eye image L and a right-eye image R on the screen in a very short cycle, and shutter glasses 20 that are worn on the head by an observer.

The liquid crystal display 10 includes a liquid crystal display panel 11, a backlight 12, an image signal processing section 13, a shutter control section 14 that controls the open/close timing of the shutter mechanism of the shutter glasses 20, a timing control section 15, a backlight control section 16, a data driver 17, and a gate driver 18. In the present embodiment, the liquid crystal display 10 displays and outputs an image on the basis of an input image signal Dᵢₙ including a right-eye image signal D_{R} and a left-eye image signal D_{L} with a left/right disparity.

The liquid crystal display panel 11 is of an active matrix type in which TFTs are arranged in individual pixels. The backlight 12 is a light source that irradiates the liquid crystal display panel 11 with light. The backlight 12 is controlled so as to be switch its lighting (light-emitting) operation and extinguishing operation by time division, on the basis of a control signal CTL_{B} supplied from the backlight control section 16.

As the backlight 12, for example, an LED (Light Emitting Diode), a CCFL (Cold Cathode Fluorescent Lamp), or the like can be used. It should be noted, however, that use of a CCFL is susceptible to afterglow, and also the afterglow characteristics differ for each of RGB colors. Accordingly, the following description is given assuming that an LED with relatively little afterglow is used as the backlight 12.

The liquid crystal display panel 11 has a plurality of pixels arrayed in matrix as a whole, and modulates light emitted from the backlight 12 on the basis of an image voltage supplied from the data driver 17, in accordance with a driving signal supplied from the gate driver 18, thereby performing image display based on the input image signal Dᵢₙ. In the present embodiment, the liquid crystal display panel 11 alternately displays the right-eye image R based on the right-eye image signal D_{R} and the left-eye image L based on the left-eye image signal D_{L} by time division, within a predetermined cycle such as a 1-frame period.

The image signal processing section 13 controls the write order (that is, the display order) of the right-eye image signal D_{R} and the left-eye image signal D_{L} to the liquid crystal display panel 11 on the basis of the input image signal Dᵢₙ, thereby generating an image signal for the liquid crystal display panel 11. In the present embodiment, from the input image signal Dᵢₙ, the image signal processing section 13 generates an image signal D1 in which the left-eye image signal D_{L} and the right-eye image signal D_{R} are arranged alternately within a 1-frame period. It should be noted that hereinafter, of the 1-frame period, the display period of the left-eye image L and the display period of the right-eye image R will be referred to as "L sub-frame period" and "R sub-frame period", respectively.

The timing control section 15 controls the drive timing of each of the gate driver 18 and the data driver 17, and supplies the image signal D1 supplied from the image signal processing section 13 to the data driver 17. The timing control section 15 may be configured to perform overdrive processing for the image signal D1.

The gate driver 18 sequentially drives pixels in the liquid crystal display panel 11 along gate lines, in accordance with timing control by the timing control section 15.

The data driver 17 supplies an image voltage based on the image signal D1 supplied from the timing control section 15, to each of the pixels in the liquid crystal display panel 11. Specifically, D/A conversion is applied to the image signal D1 to generate an analog image signal corresponding to the image voltage, and the analog image signal is outputted to each of the pixels.

The shutter control section 14 outputs, to shutter glasses 20, a timing control signal CTL for controlling the switching of opening and closing of the left and right shutter mechanisms, which corresponds to the output timing of each of the right-eye image signal D_{R} and the left-eye image signal D_{L} by the image signal processing section 13. It should be noted that as means for transmitting the timing control signal CTL to the shutter glasses 20, other than using wireless communication such as infrared communication or wireless LAN (Local Area Network), it is also possible to use wire communication by connecting the shutter glasses 20 to the liquid crystal display 10. It should be noted that the specification of Japanese Patent Application No. 2009-276948 which has already been assigned to the present applicant discloses an image display system in which the liquid crystal display 10 and the shutter glasses 20 are connected to each other by a wireless network such as IEEE802.15.4.

The shutter glasses 20 are worn by an observer (not shown in Fig. 1) of the liquid crystal display 10 to enable stereoscopic vision. The shutter glasses 20 have a left-eye lens 21L and a right-eye lens 21R. The left-eye lens 21L and the right-eye lens 21R are each provided with a light-blocking shutter (not shown) for blocking the opening from light. The light-blocking shutters are each formed by, for example, a liquid crystal shutter. The enable state of the light-blocking function in these light-blocking shutters (that is, the closed state), and the disable state (that is, the open state) are controlled by the control signal CTL supplied from the shutter control section 14.

The shutter control section 14 controls the light-blocking shutters of the shutter glasses 20 so that the open state and closed state of each of the left-eye lens 21R and the right-eye lens 21L switch alternately in accordance with the respective display periods of the left-eye image L and right-eye image R. Specifically, the shutter control section 14 performs control for setting the light-blocking shutter of the left-eye lens 21L to the open state and setting the light-blocking shutter of the right-eye lens 21R to the closed state in the L sub-frame period, and for setting the initial light-blocking shutter of the right-eye lens 21R to the open state and setting the light-blocking shutter of the left-eye lens 21L to the closed state in the R sub-frame period.

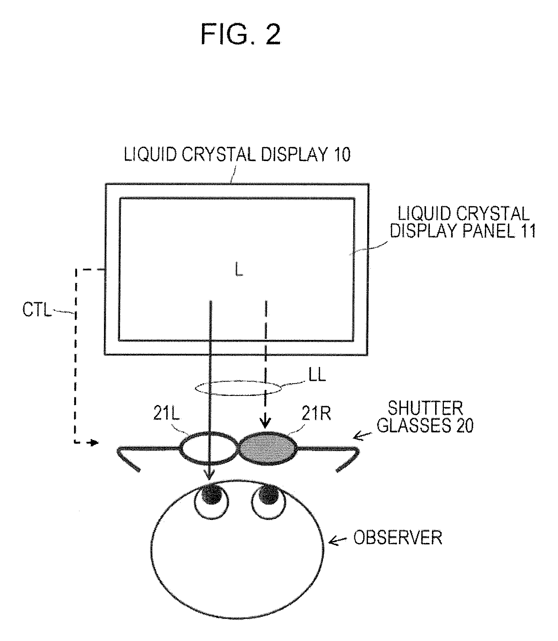

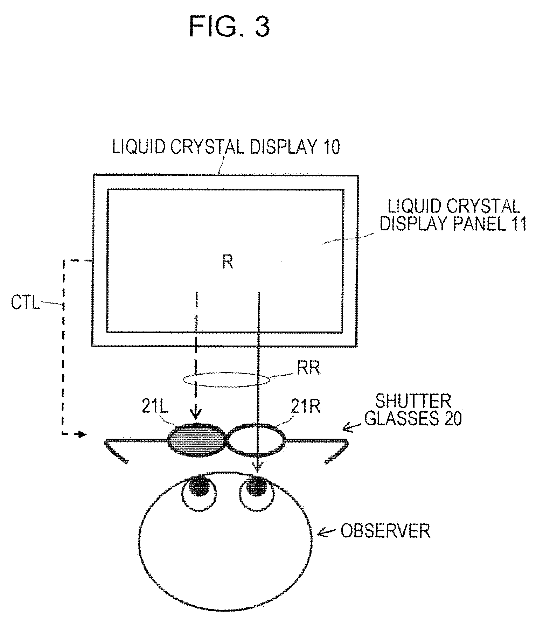

Fig. 2 shows the control operation of the shutter glasses 20 in the L sub-frame period. As shown in the drawing, in the L sub-frame period, on the basis of the control signal CTL from the shutter control section 14, the shutter of the left-eye lens 21L is set to the open state, and the shutter of the right-eye lens 21R is set to the closed state, so that display light LL based on the left-eye image L passes through only the left-eye lens 21L. Also, Fig. 3 shows the control operation of the shutter glasses 20 in the R sub-frame period. As shown in the drawing, in the R sub-frame period, on the basis of the control signal CTL from the shutter control section 14, the shutter of the right-eye lens 21R is set to the open state, and the shutter of the left-eye lens 21L is set to the closed state, so that display light RR based on the right-eye image R passes through only the right-eye lens 21R.

The backlight control section 16 supplies a timing control signal (control signal CTL_{B}), which corresponds to the output timing of each of the right-eye image signal D_{R} and the left-eye image signal D_{L} by the image signal processing section 13, to the backlight 12. Thus, the backlight control section 13 controls the lighting operation and extinguishing operation of the backlight 12 so as to switch by time division, in synchronism with switching of display between the left-eye image L and the right-eye image R. Specifically, the backlight control section 16 lights the backlight 12 at predetermined timing (start time) and duty (duration), in the respective display periods of the left-eye image L and right-eye image R.

In the case of displaying a stereoscopic image by using shutter glasses, when displaying the left-eye image L and the right-eye image R by time division, it is necessary to separate the left-eye image L and the right-eye image R so as to avoid crosstalk.

In the case of the stereoscopic image display system 1 using the liquid crystal display 10 as shown in Fig. 1, the left-eye image L and the right-eye image R can be separated by, for example, keeping the backlight lit at all times, and providing a no-display period during which both the shutters become simultaneously closed, when alternately switching the open and close states of the left and right shutter mechanisms in the shutter glasses 20.

In the example shown in Fig. 7 (as mentioned previously), the backlight 12 is kept lit at all times, and the period during which the display light LL based on the left-eye image L passes through only the left-eye lens 21L (left-eye image L display period), and the period during which the display light RR based on the right-eye image R passes through only the right-eye lens 21R (right-eye image R display period) are arranged alternately, while being separated by the no-display period during which both the shutter mechanisms become simultaneously closed. However, since it takes time for the liquid crystals used for shuttering to rise, there is a problem in that at the time when each of the left and right shutter mechanisms switches to the open state, display light based on each of the left and right images becomes dark in this rising portion and passes through each lens, thus producing a period during which a dark image is presented to the observer. Moreover, since the period for which the shutter mechanism is set to the open state is short, and the rise time takes up a large proportion of this open period, image degradation becomes non-negligible.

Also, as another method of separating the left-eye image L and the right-eye image R in the stereoscopic image display system 1 using the liquid crystal display 10, there is a method of lighting the backlight 12 in synchronism with the left and right shutter mechanisms on the shutter glasses 20 side, rather than lighting the backlight 12 at all times. In the example shown in Fig. 8, on the shutter glasses 20 side, the period for which each of the left and right shutters is set to the open state is relatively long. Then, the backlight 12 is lit intermittently within the open period of each of the left and right shutter mechanisms, thereby alternately creating a period during which the display light LL based on the left-eye image L passes through only the left-eye lens 21L (left-eye image L display period), and a period during which the display light RR based on the right-eye image R passes through only the right-eye lens 21R (right-eye image R display period).

By placing the lighting period of the backlight 12 so as to avoid the rise time within the open period of the shutter mechanism, it is possible to prevent an image from becoming dark. Also, in the case where an LED is used as the backlight 12, since peak brightness increases by making its lighting period short, thereby achieving an improvement in brightness when displaying a stereoscopic image. However, when the lighting period of the backlight 12 is set short, although power consumption drops, the quantity of heat released decreases, causing the response speed of the liquid crystal display panel 11 to drop. When the response speed of the liquid crystal display panel 11 drops, there is a problem in that crosstalk deteriorates.

To prevent crosstalk, the period during which the display light LL based on the left-eye image L passes through only the left-eye lens 21L, and the period during which the display light RR based on the right-eye image R passes through only the right-eye lens 21R need to be separated by a no-display period of a predetermined duration or more in which both the shutter mechanisms become simultaneously closed, or the backlight is extinguished. In the method shown in Fig. 8, since the lighting period of the backlight 12 directly equates to the period during which light passes through only the left-eye lens 21L or the right-eye lens 21R, the duty of the lighting period of the backlight 12 (BL lighting period) must be limited to, for example, 25% or less. When the duty is low, although the brightness of the backlight 12 improves, crosstalk occurs due to a drop in the temperature of the liquid crystal display panel 11. On the other hand, in the method shown in Fig. 7, the period during which each of the shutter mechanisms of the left-eye lens 21L and right-eye lens 21R opens is the period during which light passes through only the left-eye lens 21L or the right-eye lens 21R, so the duty of the lighting period (BL lighting period) during which the backlight 12 lights up can be set to 100%. In this case, there is no drop in the temperature of the liquid crystal display panel 11, and no crosstalk occurs, but the brightness of the display image drops.

In short, the brightness when displaying a stereoscopic image and crosstalk are in a tradeoff relationship with respect to the duration of the lighting period of the backlight.

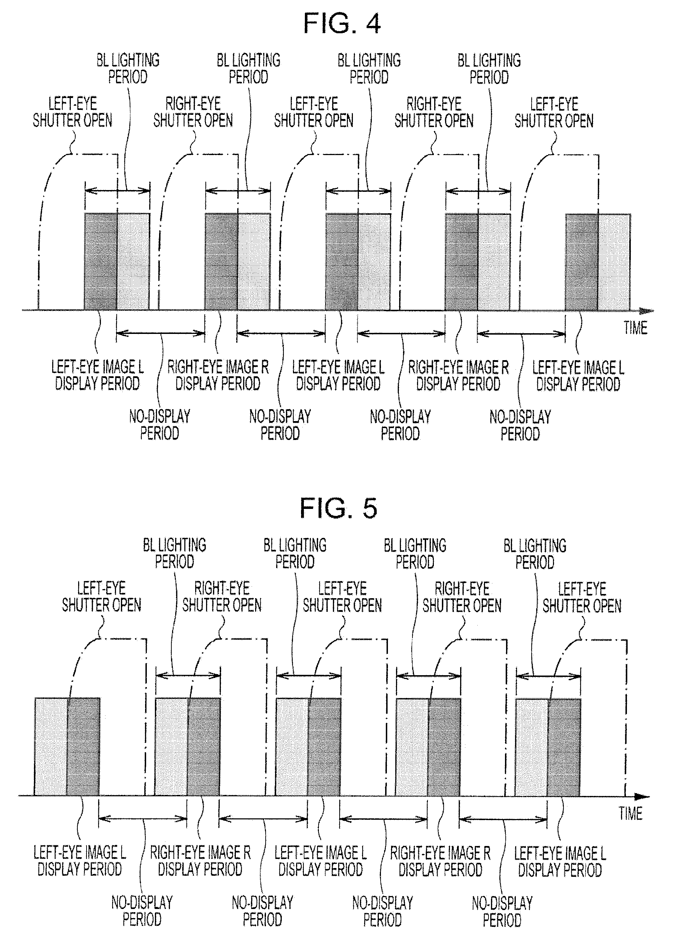

Accordingly, as a still another method of separating the left-eye image L and the right-eye image R by lighting the backlight in synchronism with the left and right shutter mechanisms on the shutter glasses 20 side, as shown in Fig. 4, the present inventors propose a method of opening the shutter mechanism of the corresponding one of the left and right lenses 21L and 21R in the period during which the backlight 12 is extinguished, and closing the shutter mechanism while the backlight 12 is lit.

Hereinafter, a description will be given of a procedure for implementing the method shown in Fig. 4 in the stereoscopic image display system 1 shown in Fig. 1.

The backlight control section 16 supplies a timing control signal (control signal CTL_{B}), which corresponds to the output timing of each of the right-eye image signal D_{R} and the left-eye image signal D_{L} by the image signal processing section 13, to the backlight 12, thereby intermittently lighting the backlight 12 in each of the L sub-frame period and the R sub-frame period.

On the other hand, the shutter control section 14 outputs, to the shutter glasses 20, a timing control signal CTL for switching the light-blocking shutter of the left-eye lens 21L to the open state in a period during which the backlight 12 is extinguished within the L sub-frame period on the basis of the output timing of the left-eye image signal D_{L} by the image signal processing section 13. Meanwhile, on the shutter glasses 20 side, on the basis of the control signal CTL from the shutter control section 14, the shutter of the left-eye lens 21L is set to the open state, and the shutter of the right-eye lens 21R is set to the closed state, so that the display light LL based on the left-eye image L passes through only the left-eye lens 21L. Thereafter, the backlight 12 lights up, and on the shutter glasses 20 side, the shutter of the left-eye lens 21L is switched to the closed state within the period during which the backlight is lit, resulting in a no-display period during which both the left and right shutter mechanisms are simultaneously closed.

Subsequently, the shutter control section 14 outputs, to the shutter glasses 20, a timing control signal CTL for switching the light-blocking shutter of the right-eye lens 21R to the open state in a period during which the backlight 12 is extinguished within the R sub-frame period on the basis of the output timing of the left-eye image signal D_{R} by the image signal processing section 13. Meanwhile, on the shutter glasses 20 side, on the basis of the control signal CTL from the shutter control section 14, the shutter of the right-eye lens 21R is set to the open state, and the shutter of the left-eye lens 21L is set to the closed state, so that the display light RR based on the left-eye image L passes through only the right-eye lens 21R. Thereafter, the backlight 12 lights up, and on the shutter glasses 20 side, the shutter of the right-eye lens 21R is switched to the closed state within the period during which the backlight is lit, resulting in a no-display period during which both the left and right shutter mechanisms are simultaneously closed.

In the method shown in Fig. 4, as in the method shown in Fig. 8, by lighting the backlight 12 intermittently, the period for which each of the left and right shutter mechanisms is set to the open state on the shutter glasses 20 side is made relatively long. It should be noted, however, that unlike the method shown in Fig. 8, at the time when the L sub-frame period and the R sub-frame period switch, that is, when switching the open and close states of each of the left and right shutter mechanisms, a no-display period is provided during which the backlight 12 is lit but both of the left and right shutter mechanisms becomes closed, so that neither the left-sys lens 21L nor the right-eye lens 21R passes display light for the liquid crystal display 10.

Also, according to the method shown in Fig. 4, the backlight is extinguished at the point in time when each of the shutters of the left-eye lens 21L and right-eye lens 21R switches to the open state (as mentioned previously), and lights up after the shutter has switched to the open/close state and further the rise time of the liquid crystals of the shutter has elapsed. Thereafter, the backlight 12 is extinguished within the no-display period during which neither the left-eye lens 21L nor the right-eye lens 21R passes display light for the liquid crystal display 10, when switching the open and close states of each of the left and right shutter mechanisms.

Therefore, according to the method shown in Fig. 4, since the backlight 12 is lit on the liquid crystal display 10 side after the shutter mechanism on the shutter glasses 20 side has responded sufficiently, there is no adverse effect caused by lack of response at the time of rising of the shutter mechanism. Also, since it is possible to raise peak brightness in comparison to the method shown in Fig. 7 in which the open and close states of the shutter mechanism are switched alternately on the shutter glasses 20 side while keeping the backlight 12 lit at all times, it is possible to improve brightness when displaying a stereoscopic image.

Also, according to the method shown in Fig. 4, by making the lighting period of the backlight 12 relatively long in comparison to the method shown in Fig. 8, a drop in the temperature of the liquid crystal display panel 11 following extinguishing of the backlight 12 becomes less, and so does deterioration of crosstalk. In the method shown in Fig. 4, even within the period during which the backlight 12 is lit, the period during which both the left and right shutter mechanisms are closed becomes a no-display period. Thus, to obtain a no-display period of a sufficient duration for preventing crosstalk, the duty of the backlight 12 can be made as large as, for example, 50%. On the other hand, even in the case of similarly lighting the backlight 12 intermittently, with the method shown in Fig. 8, the lighting period of the backlight 12 directly equates to the period during which light passes through only the left-eye lens 21L or the right-eye lens 21R. Thus, in order to set a no-display period of a sufficient duration to prevent crosstalk, the duty of the backlight 12 must be limited to, for example, 25% or less (as mentioned previously).

The brightness when displaying a stereoscopic image and crosstalk are in a tradeoff relationship with respect to the duration of the lighting period of the backlight. The relationship between the respective drive methods for the backlight 12 shown in Figs. 7, 8, and 4, the brightness when displaying a stereoscopic image, and crosstalk is summarized in the table below. It should be noted that the quantity of current allowed to flow through the backlight is set as appropriate in accordance with the power supply substrate or backlight element, and the values shown in Table 1 are merely an example.

**[Table 1]**

| Backlight drive method | Brightness | Crosstalk |
|---|---|---|
| BL duty Current Heat | × | ○ |
| 100% × 1 times = 100 | | |
| BL duty Current Heat | △ | △ |
| 50% × 1.6 times = 80 | | |
| BL duty Current Heat | ○ | × |
| 25% × 2 times = 50 | | |

In the method shown in Fig. 7, the duty at which the backlight 12 lights up is 100%, and although the brightness when displaying a stereoscopic image drops, crosstalk can be prevented.

In the method shown in Fig. 8, the duty of the backlight 12 must be limited to, for example, 25% or less. Thus, although the brightness when displaying a stereoscopic image improves, there is a fear that crosstalk may occur.

In the method shown in Fig. 4, the duty of the backlight 12 can be made as large as, for example, 50%.
Thus, the brightness when displaying a stereoscopic image can be improved while preventing crosstalk.

Also, as a modification of the method of driving the shutter mechanism on the shutter glasses 20 side shown in Fig. 4, a method is conceivable in which, as shown in Fig. 5, the shutter mechanism of the corresponding one of the left and right lenses 21L and 21R on the shutter glasses 20 side is opened within the time during which the backlight 12 is lit, and the shutter mechanism is closed while the backlight 12 is extinguished.

The backlight control section 16 supplies a timing control signal (control signal CTL_{B}), which corresponds to the output timing of each of the right-eye image signal D_{R} and the left-eye image signal D_{L} by the image signal processing section 13, to the backlight 12, thereby intermittently lighting the backlight 12 in each of the L sub-frame period and the R sub-frame period.

On the other hand, the shutter control section 14 outputs, to the shutter glasses 20, a timing control signal CTL for switching the light-blocking shutter of the left-eye lens 21L to the open state in a period during which the backlight 12 is lit within the L sub-frame period on the basis of the output timing of the left-eye image signal D_{L} by the image signal processing section 13. Meanwhile, on the shutter glasses 20 side, on the basis of the control signal CTL from the shutter control section 14, the shutter of the left-eye lens 21L is set to the open state, and the shutter of the right-eye lens 21R is set to the closed state, so that the display light LL based on the left-eye image L passes through only the left-eye lens 21L. Thereafter, the backlight 12 is extinguished, and on the shutter glasses 20 side, the shutter of the left-eye lens 21L is switched to the closed state within the period during which the backlight 12 is extinguished, resulting in a no-display period during which both the left and right shutter mechanisms are simultaneously closed.

Subsequently, the shutter control section 14 outputs, to the shutter glasses 20, a timing control signal CTL for switching the light-blocking shutter of the right-eye lens 21R to the open state in a period during which the backlight 12 is lit within the R sub-frame period on the basis of the output timing of the right-eye image signal D_{R} by the image signal processing section 13. Meanwhile, on the shutter glasses 20 side, on the basis of the control signal CTL from the shutter control section 14, the shutter of the right-eye lens 21R is set to the open state, and the shutter of the left-eye lens 21L is set to the closed state, so that the display light RR based on the left-eye image L passes through only the right-eye lens 21R. Thereafter, the backlight 12 is extinguished, and on the shutter glasses 20 side, the shutter of the right-eye lens 21R is switched to the closed state within the period during which the backlight 12 is extinguished, resulting in a no-display period during which both the left and right shutter mechanisms are simultaneously closed.

With the method shown in Fig. 5 as well, the duty of the backlight 12 can be made as large as, for example, 50%, and the brightness when displaying a stereoscopic image can be improved while preventing crosstalk.

The foregoing description is directed to the case of lighting and extinguishing the backlight uniformly across the entire screen of the liquid crystal display panel 11. Among liquid crystal displays, there are products of a partial drive type in which the screen of the liquid crystal panel is split into a plurality of blocks, and display is switched on a block-by-block basis. When a stereoscopic image is to be displayed by using such a partial drive type liquid crystal display, it is necessary to display the left-eye image L and the right-eye image R alternately on the screen and, at the same time, separately provide the images to the left eye and the right eye in synchronism with the cycles of the left-eye image L and right-eye image R.

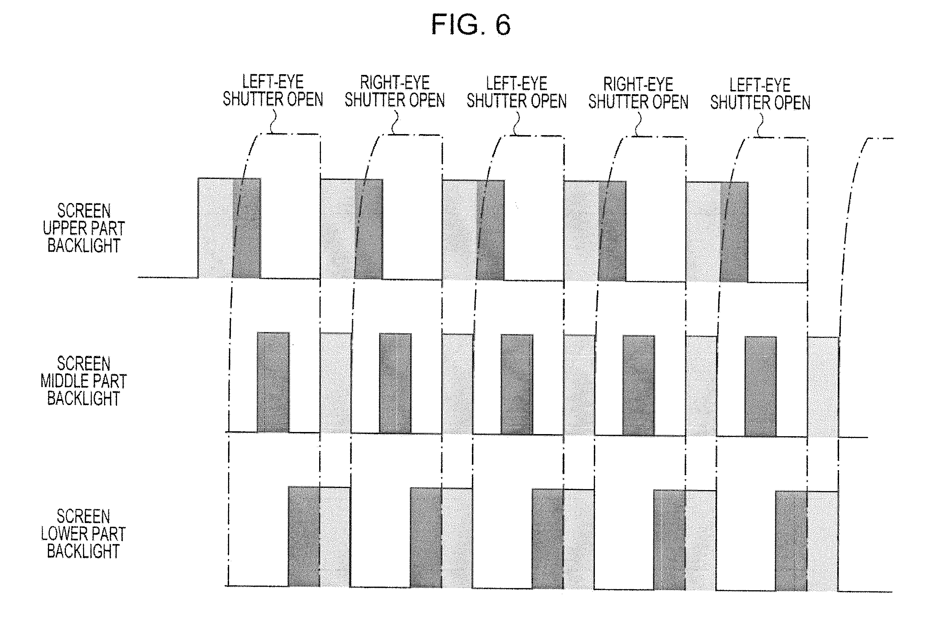

Hereinbelow, an embodiment to which the present invention is applied will be described with reference to Fig. 6, by taking as an example a liquid crystal display in which the screen of the liquid crystal panel is split into three blocks of upper, middle, and lower parts, and the backlight is driven partially.

Each of backlights that irradiates each of the blocks lights up intermittently in the L sub-frame period and the R sub-frame period. In the example shown in the drawing, writing to the liquid crystal display is performed in a line sequential manner from the upper part of the screen, and the backlights are lit from the upper part of the screen in the order of the middle part of the screen and then the lower part of the screen. In a case where writing to the liquid crystal display is performed from the lower part of the screen, the backlights are lit from the lower part of the screen in the order of the middle part of the screen and then the upper part of the screen.

Here, the shutter mechanism of either the corresponding left or right lens 21L/R on the shutter glasses 20 side is switched to the open state in a period during which the backlight irradiating at least one of the blocks obtained by splitting the screen is lit. Then, the corresponding shutter mechanism is switched to the closed state in a period during which the same backlight is extinguished. In the example shown in Fig. 6, such opening/closing operation of the shutter mechanism is performed in the upper part of the screen.

On the other hand, in the middle part of the screen, the opening and closing of the shutter mechanism are switched in a period during which the backlight is extinguished, and the lighting period of the backlight is contained within a period during which the shutter mechanism is in the open state. Also, in the lower part of the screen, the shutter mechanism switches to the open state in a period during which the backlight is extinguished, and the shutter mechanism switches to the closed state in a period during which the backlight is lit.

By lighting the backlight intermittently in all of the blocks in the upper part of the screen, the middle part of the screen, and the lower part of the screen, the brightness when displaying a stereoscopic image can be improved. Also, by increasing the duty of each backlight, crosstalk can be prevented.

The period during which both the left and right shutter mechanisms are in the closed state on the shutter glasses side becomes a no-display period during which neither the left lens nor right lens passes display light based on an image intended for each eye. In the example shown in Fig. 6, by using this no-display period, the backlights for all of the blocks are lit all at once (or the backlight for at least one of the blocks is lit) to increase duty, thereby preventing a drop in the temperature of the liquid crystal display panel in the extinguishing period of the backlight in order to maintain response speed.

### Industrial Applicability

The present invention has been described above in detail with reference to specific embodiments. However, it is obvious that a person skilled in the art can make various modifications to and substitutions for the embodiments without departing from the scope of the present invention.

The series of processing according to the embodiments described in this specification can be executed by either of hardware and software. If the processing is to be implemented by software, a computer program describing the procedure of the processing in the software in a computer-readable format may be installed and executed on a predetermined computer. Also, this computer program can be previously embedded in a product such as a liquid crystal display.

Also, as an example of application to a liquid crystal display of a partial drive type, a description has been given of an example in which the screen of the liquid crystal display panel is split into three blocks of upper, middle, and lower parts, and each backlight is lit in turn from the upper part of the screen. However, the scope of the present invention is not limited to this.

In short, the present invention has been disclosed by way of illustration, and the descriptions in this specification should not be construed restrictively. The scope of the present invention should be determined with reference to the claims.

### Reference Signs List

- 1: stereoscopic image display system
- 10: liquid crystal display
- 20: shutter glasses
- 11: liquid crystal display panel
- 12: backlight
- 13: image signal processing section
- 14: shutter control section
- 15: timing control section
- 16: backlight control section
- 17: data driver
- 18: gate driver
- 20: shutter glasses
- 21L: left-eye lens, 21R right-eye lens

## Claims

1. An image display apparatus comprising:
a display section that switches and displays a plurality of images that are different from each other every sub-frame period;
a light source section that illuminates the display section while alternating between a lighting operation and an extinguishing operation so as to include a lighting period within each sub-frame period; and
a shutter control section that controls front open/close timing with respect to a shutter mechanism for observing the plurality of images while separating the images, so that the shutter mechanism is switched to an open state in a period during which the light source section is extinguished, and is switched to a closed state in a period during which the light source section is lit.

2. The image display apparatus according to Claim 1, wherein the light source section includes a light-emitting diode (LED).

3. An image display system comprising:
a shutter mechanism; and
an image display apparatus including a display section that switches and displays a plurality of images that are different from each other every sub-frame period, a light source section that illuminates the display section while alternating between a lighting operation and an extinguishing operation so as to include a lighting period within each sub-frame period, and a shutter control section that controls open/close timing with respect to the shutter mechanism so that the shutter mechanism is switched to an open state in a period during which the light source section is extinguished, and is switched to a closed state in a period during which the light source section is lit.

4. An image presentation method which separates and presents a plurality of images that are different from each other by an opening/closing operation of a shutter mechanism, the plurality of images being displayed by an image display apparatus having a display section that displays the images and a light source section that illuminates the display section, comprising:
an image controlling step of switching and displaying the plurality of images that are different from each other every sub-frame period by the display section;
a backlight controlling step of causing the light source section to alternate between a lighting operation and an extinguishing operation so as to include a lighting period within each sub-frame period; and
a shutter controlling step of switching the shutter mechanism to an open state in a period during which the light source section is extinguished, and switching the shutter mechanism to a closed state in a period during which the light source section is lit.

5. A computer program which is described in a computer-readable format so as to execute, on a computer, processing for separating and presenting a plurality of images that are different from each other by an opening/closing operation of a shutter mechanism, the plurality of images being displayed by an image display apparatus having a display section that displays the images and a light source section that illuminates the display section, the computer program causing the computer to function as:
image controlling means for switching and displaying the plurality of images that are different from each other every sub-frame period;
backlight controlling means for causing the light source section to alternate between a lighting operation and an extinguishing operation so as to include a lighting period within each sub-frame period during which the display section displays each of the plurality of images by time division; and
shutter controlling means for switching the shutter mechanism to an open state in a period during which the light source section is extinguished, and switching the shutter mechanism to a closed state in a period during which the light source section is lit.

6. An image display apparatus comprising:
a display section that switches and displays a plurality of images that are different from each other every sub-frame period;
a light source section that illuminates the display section while alternating between a lighting operation and an extinguishing operation so as to include a lighting period within each sub-frame period; and
a shutter control section that controls open/close timing with respect to a shutter mechanism for observing the plurality of images while separating the images, so that the shutter mechanism is switched to an open state in a period during which the light source section is lit, and is switched to a closed state in a period during which the light source section is extinguished.

7. An image display apparatus comprising:
a display section that switches and displays a plurality of images that are different from each other every sub-frame period, for each of blocks obtained by splitting a screen into a plurality of parts;
a plurality of light source sections that are provided for each of the blocks in the display section, and provide illumination while alternating between a lighting operation and an extinguishing operation; and
a shutter control section that controls open/close timing with respect to a shutter mechanism for observing the plurality of images while separating the images, so that the shutter mechanism is switched to an open state in a period during which at least one of the plurality of light source sections is lit, and is switched to a closed state in a period during which the at least one light source is extinguished.

8. The image display apparatus according to Claim 7, wherein:
the image display apparatus comprises a plurality of shutter mechanisms; and
at least one of the plurality of light source sections is lit in a period during which all of the shutter mechanisms are in a closed state.
